# EUROPEAN PATENT APPLICATION

(11) **EP 4 371 803 A1**
(43) Date of publication of application: **22.05.2024**
(21) Application number: 23152702.9
(22) Date of filing: 20.01.2023
(51) Int. Cl.: B60L 50/75, B60L 58/40, B60W 10/26, B60W 10/28, H01M 16/00, H02J 7/34, B60L 58/12, B60L 58/30, H02J 7/00, H01M 8/04537, H01M 8/04858

(54) **A COMPUTER-IMPLEMENTED METHOD FOR CONTROLLING AN ELECTRIC POWER PRODUCING ASSEMBLY**

(71) Applicant: Volvo Construction Equipment AB, 631 85 Eskilstuna (SE)
(72) Inventor: Carnevali, Alessandro, 633 62 Eskilstuna (SE)
(74) Representative: Valea AB

(57) **Abstract**

The presentation invention relates to a computer system and a computer-implemented method for controlling an electric power producing assembly (130) by a processor device of a computer system (400). The assembly (130) comprises a fuel cell system (110) and an energy storage system (120) comprising one or more batteries, wherein said fuel cell system (110) and said energy storage system (120) are adapted to together produce electric power. The method comprises:
- receiving (S1) a total power request for said electric power producing assembly (130),
- determining (S2) information related to a power level currently expected from said energy storage system (120) on the basis of said total power request,
- using (S3) dead band limits for said energy storage system (120),
- determining (S4) a first fuel cell power request as a portion of the power level currently expected from said energy storage system (120) being outside one of said energy storage system dead band limits, and
- controlling (S5) said fuel cell system (110) on the basis of at least said first fuel cell power request.

## Description

### TECHNICAL FIELD

The disclosure relates generally to control of an electric power producing assembly. In particular aspects, the disclosure relates to a computer-implemented method for controlling an electric power producing assembly which comprises a fuel cell system and an energy storage system. The disclosure can be applied in heavy-duty vehicles, such as trucks, buses, and construction equipment. Although the disclosure may be described with respect to a particular vehicle, the disclosure is not restricted to any particular vehicle.

### BACKGROUND

In recent years, fuel cell systems have been considered as one of power sources for producing electric power in different applications, e.g., in fuel cell electric vehicles. Typically, a fuel cell system is used together with an energy storage system for providing electric power to various components of the fuel cell electric vehicle. The electric power may be used for powering one or more electric motors for creating a propulsion force to the vehicle. It may also be used for energizing auxiliary electric power consumers, such as an electric motor for an air conditioning system of the vehicles. The electric motors together with all the auxiliary electric power consumers may be grouped as a power consuming assembly and during operation of the vehicles, there will be various demands from the different power consuming components or from the power consuming assembly as a whole. There is a strive to develop a control method of the fuel cell system and the energy storage system such that the demands are satisfied.

### SUMMARY

According to a first aspect of the disclosure, a computer system comprising a processor for controlling an electric power producing assembly according to claim 1 is provided. The assembly comprises a fuel cell system and an energy storage system comprising one or more batteries, wherein the fuel cell system and the energy storage system are adapted to together produce electric power. The processor device is further configured to:
- receive a total power request for the electric power producing assembly,
- determine information related to a power level currently expected from the energy storage system on the basis of the total power request,
- use dead band limits for the energy storage system,
- determine a first fuel cell power request as a portion of the power level currently expected from the energy storage system being outside one of the energy storage system dead band limits, and
- control the fuel cell system on the basis of at least the first fuel cell power request.

The first aspect of the disclosure may seek to find an in at least some aspects improved computer system for controlling an electric power producing assembly. The assembly may comprise a fuel cell system and an energy storage system including one or more batteries. Generally, fuel cells and batteries have different behaviors. A fuel cell system may have a relatively large power producing capacity but may be slow in response to a newly generated power request. The energy storage system, on the other hand, may be fast to provide electric power but may be limited to relatively small power capacities. The present disclosure is based on a realization that it is advantageous to control the electric power producing assembly by taking these behaviors into consideration. Since the fuel cell system has a relatively slow dynamic response and may need time to reach a new steady-state condition after a power request, one option could be to reduce a dynamic power demand for the fuel cell system, and instead, to mainly utilize power from the energy storage system to meet the dynamic power demand.

The dynamic power demand may be understood as a power demand that fluctuates dynamically with the total power request for the electric power producing assembly. Each time when a new total power request is generated, the dynamic power demand may be interpreted as a power gap between the newly generated power request and an actual power available from the electric power producing assembly, e.g. from the fuel cell system. It may define how much power needs to be provided to satisfy the total power request. In some examples, dynamic power may be provided by the energy storage system due to the energy storage system characteristics discussed above, and a power level currently expected from the energy storage system to satisfy the total power request can therefore be defined. The power level currently expected from the energy storage system may fluctuate dynamically with the total power request and/or the actual power available from the electric power producing assembly.

The inventor of the present disclosure has realized that it may not always be preferable that the dynamic power is completely supplied by the energy storage system. The power may need to be provided without damaging the batteries of the energy storage system. Therefore, it may be advantageous to control the electric power producing assembly in a way such that the dynamic power demand for the fuel cell system is kept appropriately low while the energy storage system is not damaged. According to the present disclosure, it is achieved by using dead band limits for the energy storage system, such that the energy storage system will operate within the dead band limits and the available power within the dead band limits will contribute to the dynamic power demand. It is not preferable to operate an energy storage system at its physical limits, which may be seen as hard limits. The dead band limits, on the other hand, may be understood as soft limits and may be set differently for different scenarios or applications. The band between the limits may be enlarged to allow a wider operating window for the energy storage system or be restricted to a narrower operating window. As discussed above, the power level currently expected from the energy storage system may fluctuate dynamically over time, and the dead band limits, however, may be constant once it has been set. Therefore, depending on how the dead band limits are set, the power level currently expected from the energy storage system may be partially or fully located within the dead band limits. When power level currently expected from the energy storage system is partially located outside one of the dead band limits, the portion that exceeds the dead band limits will be transferred to a power request for the fuel cell system termed as the first fuel cell power request, such that the fuel cell system will provide the portion instead. When power level currently expected from the energy storage system is fully located within the dead band limits, no power will be transferred to the first fuel cell power request and the dynamic power will be completely provided by the energy storage system.

A technical benefit may be that the electric power producing assembly in a way such that the dynamic power demand for the fuel cell system is kept appropriately low while the energy storage system will operate within defined limits.

According to a second aspect of the disclosure, a computer-implemented method for controlling an electric power producing assembly according to claim 2 is provided. The assembly comprises a fuel cell system and an energy storage system comprising one or more batteries, wherein the fuel cell system and the energy storage system are adapted to together produce electric power. The method comprises:
- receiving a total power request for the electric power producing assembly,
- determining information related to a power level currently expected from the energy storage system on the basis of the total power request,
- using dead band limits for the energy storage system,
- determining a first fuel cell power request as a portion of the power level currently expected from the energy storage system being outside one of the energy storage system dead band limits, and
- controlling the fuel cell system on the basis of at least the first fuel cell power request.

The second aspect of the disclosure may seek to find an in at least some aspects improved method of controlling an electric power producing assembly. The assembly may comprise a fuel cell system and an energy storage system including one or more batteries. Generally, fuel cells and batteries have different behaviors. A fuel cell system may have a relatively large power producing capacity but may be slow in response to a newly generated power request. The energy storage system, on the other hand, may be fast to provide electric power but may be limited to relatively small power capacities. The present disclosure is based on a realization that it is advantageous to control the electric power producing assembly by taking these behaviors into consideration. Since the fuel cell system has a relatively slow dynamic response and may need time to reach a new steady-state condition after a power request, one option could be to reduce a dynamic power demand for the fuel cell system, and instead, to mainly utilize power from the energy storage system to meet the dynamic power demand.

The dynamic power demand may be understood as a power demand that fluctuates dynamically with the total power request for the electric power producing assembly. Each time when a new total power request is generated, the dynamic power demand may be interpreted as a power gap between the newly generated power request and an actual power available from the electric power producing assembly, e.g. from the fuel cell system. It may define how much power needs to be provided to satisfy the total power request. In some examples, dynamic power may be provided by the energy storage system due to the energy storage system characteristics discussed above, and a power level currently expected from the energy storage system to satisfy the total power request can therefore be defined. The power level currently expected from the energy storage system may fluctuate dynamically with the total power request and/or the actual power available from the electric power producing assembly.

The inventor of the present disclosure has realized that it may not always be preferable that the dynamic power is completely supplied by the energy storage system. The power may need to be provided without damaging the batteries of the energy storage system. Therefore, it may be advantageous to control the electric power producing assembly in a way such that the dynamic power demand for the fuel cell system is kept appropriately low while the energy storage system is not damaged. According to the present disclosure, it is achieved by using dead band limits for the energy storage system, such that the energy storage system will operate within the dead band limits and the available power within the dead band limits will contribute to the dynamic power demand. It is not preferable to operate an energy storage system at its physical limits, which may be seen as hard limits. The dead band limits, on the other hand, may be understood as soft limits and may be set differently for different scenarios or applications. The band between the limits may be enlarged to allow a wider operating window for the energy storage system or be restricted to a narrower operating window. As discussed above, the power level currently expected from the energy storage system may fluctuate dynamically over time, and the dead band limits, however, may be constant once it has been set. Therefore, depending on how the dead band limits are set, the power level currently expected from the energy storage system may be partially or fully located within the dead band limits. When power level currently expected from the energy storage system is partially located outside one of the dead band limits, the portion that exceeds the dead band limits will be transferred to a power request for the fuel cell system termed as the first fuel cell power request, such that the fuel cell system will provide the portion instead. When power level currently expected from the energy storage system is fully located within the dead band limits, no power will be transferred to the first fuel cell power request and the dynamic power will be completely provided by the energy storage system.

A technical benefit may be that the electric power producing assembly in a way such that the dynamic power demand for the fuel cell system is kept appropriately low while the energy storage system will operate within defined limits.

Although the first fuel cell power request has been presented herein above using a dynamic power request as an example, it should be noted that the first fuel cell power request may also be related to other portions of a power request, e.g. a static power request.

The computer-implemented method as disclosed herein may be performed in the processor device, such as in one or more electronic control units. The processor device may comprise a communication unit configured to receive various information, such as the total power request and/or the actual power available from the fuel cell system. The processor device may further comprise a calculation unit for calculating a value of the first fuel cell power request.

In some examples, including in at least one preferred example, optionally, the method further comprises:
- determining a fuel cell system actual power level indicative of a power level currently produced by the fuel cell system, and
- determining the power level currently expected from the energy storage system using the fuel cell system actual power level and the total power request, preferably subtracting the fuel cell system actual power level from the total power request.

Initially, there is a certain amount of power available from the fuel cell system, termed as a fuel cell system actual power level in the present disclosure. The fuel cell system actual power level may for instance be a fuel cell power request from a last control loop. The power level currently expected from the energy storage system may therefore be estimated by subtracting the fuel cell system actual power level from the total power request, in order to satisfy the gap between them. It may be estimated each time when a new total power request is generated, and a new fuel cell request may be determined accordingly by use of the method discussed above, and may be used as an initial available power, termed as the fuel cell system actual power level, for the next control loop. The fuel cell system actual power level may be reported constantly to the processor device.

In some examples, including in at least one preferred example, optionally, the method further comprises:
- using information related to a current state-of-charge level of the energy storage system;
- determining energy storage system state-of-charge limits for the energy storage system on the basis of the current state-of-charge level of the energy storage system;
- determining a second fuel cell power request on the basis of the current battery state-of-charge level such that the energy storage system will not operate outside the energy storage system state-of-charge limits when the fuel cell system and the energy storage system together produce electric power in accordance with the total power request, and
- controlling the fuel cell system on the basis of at least the first fuel cell power request and the second fuel cell power request.

The second fuel cell power request may for instance be understood as a static power request. Unlike the first power request which may dynamically fluctuate with the total power request, the second fuel cell request is relatively stable. It is dependent on, and is preferably only dependent on, the state-of-charge level of the energy storage system and may change steadily and smoothly with the state-of-charge level of the energy storage system. The second fuel cell request may be determined such that the fuel cell system will provide sufficient power to ensure that the energy storage system will not operate outside the determined state-of-charge limits.

In some examples, including in at least one preferred example, optionally, the method further comprises:
- controlling the fuel cell system on the basis of at least a sum of the first fuel cell power request and the second fuel cell power request.
As such, the fuel cell power may comprise a first fuel cell power request, which may for instance be regarded as a dynamic power request, and a second fuel cell power request, which may for instance be regarded as a static power request. By incorporating the first fuel cell power request and the second fuel cell power request, it may be ensured that the energy storage system will operate within the determined dead band limits as well as the determined state-of-charge limits.

In some examples, including in at least one preferred example, optionally, the method further comprises:
- in response to determining the power level currently expected from the energy storage system is higher than an energy storage system threshold and/or in response to determining that the rate of change of the first fuel cell power request is higher than a rate of change threshold, reducing the total power request.

Herein, the energy storage system threshold may for instance be physical limits of the energy storage system. If the expected power exceeds the physical limits of the energy storage system, the total power request may be forced to be reduced in order to protect the energy storage system. Alternatively, or additionally, if the rate of change of the first fuel cell power request is higher than a threshold, such that the fuel cell system is not able to accommodate such a rapid power request, the total power request may be forced to be reduced in order to protect the fuel cell system.

In some examples, including in at least one preferred example, optionally, the step of determining the second fuel cell power request comprises applying a non-linear P-gain function to the energy storage system state-of-charge limits. The P-gain function, which can be seen as a tangent function, may define the second fuel cell power request in a way such that the second fuel cell power request may be increased rapidly when the state-of-charge level of the energy storage system starts to approach to a relatively low level, e.g. when the state-of-charge level is drained to 35%, and/or will be decreased rapidly when the state-of-charge level of the energy storage system starts to approach to a relatively high level, e.g. when the state-of-charge level is increased to 65%. This in turn implies a reduced risk for reaching a state-of-charge level since the increased magnitude of the second fuel cell power request may significantly reduce such a risk.

In some examples, including in at least one preferred example, optionally, the method further comprises:
- using an operation level value, indicative of a desired operation level of the electric power producing assembly, and
- determining the dead band limits for the energy storage system using the operation level value.

In some examples, including in at least one preferred example, optionally, the step of determining the dead band limits for the energy storage system comprises:
- determining the dead band limits such that the power level currently expected from the energy storage system is located between an upper dead band limit and a lower dead band limit, wherein the difference between upper dead band limit and the lower dead band limit is dependent on the operation level value.

In some examples, including in at least one preferred example, optionally, a method for controlling an electric driveline for a vehicle is provided. The driveline comprising the electric power producing assembly, the assembly comprising a fuel cell system and an energy storage system comprising one or more batteries, wherein the fuel cell system and the energy storage system are adapted to together produce electric power, and an electric power consuming assembly being in communication with the electric power producing assembly. The method comprising:
- controlling the electric power producing assembly in accordance with a method according to the second aspect of the present disclosure, and
- feeding the electric power to the electric power consuming assembly.

The vehicle may be a fuel cell hybrid electric vehicle or a fuel cell hybrid electric working machine. It may comprise an electric power consuming assembly for receiving the electric power from the electric power producing assembly. The electric power consuming assembly may comprise one or more electric motors for creating a propulsion force to the vehicle. It may further comprise various auxiliary electric power consumers, such as an electric motor for an air conditioning system of the vehicle, or an electric motor for powering various hydraulic actuators of the working machine.

In some examples, including in at least one preferred example, optionally, the vehicle is associated with one or more of the following operation modes: an ECO mode, a power mode and a normal mode, and the method according to the first aspect of the present disclosure:
- using an operation mode currently selected for the vehicle in order to set the operation level value.

Each mode may correspond to an operation level value which may determine the dead band limits for the energy storage system. Specifically, the ECO mode may refer to a mode when a large band between the upper limit and the lower limit of the energy storage system is set. With the large band being set, the dynamic power from the fuel cell system is reduced and consequently a fuel consumption, in this case hydrogen gas consumption, is reduced. In an extreme example, the dead band limits may be set as being equal to the energy storage system's physical limits, and the energy storage system will operate at its physical limits. The total power request may be forced to be reduced such that the energy storage system will not operate at or beyond its physical limits. The power mode, on the contrary, may refer to a mode when a narrow band between the upper limit and the lower limit is set, such that power from the fuel cell system is increased. The normal mode may be a compromise between the ECO mode and the power mode. The user may manually select one of the operation modes through buttons, a machine menu or knobs in the vehicle cab. Once the mode is selected, the dead band limits will be set accordingly.

Alternatively, the dead band limits may be adjusted automatically by the processor device. The band between the upper limit and the lower limit may be enlarged or may be restricted based on an average load of the electric power consuming assembly. If the average load is relatively low, the band may be enlarged to reduce the fuel consumption and vice versa.

Alternatively, the dead band limits may be determined remotely by an offline system. The system may monitor a state-of-health (SOH) of the fuel cell system as well as the energy storage system and may determine desired dead band limits. All related data may be communicated wireless between the offline system and the processor device.

According to a third aspect of the disclosure, a computer program product comprising program code for performing the method according to the first aspect is provided, when the program is executed by the processor device.

According to a fourth aspect of the disclosure, a control system comprising one or more control units configured to perform the method according to the first aspect is provided.

According to a fifth aspect of the disclosure, a non-transitory computer-readable storage medium is provided. The non-transitory computer-readable storage medium comprises instructions, which when executed by the processor device, cause the processor device to perform the method according to the first aspect.

According to a sixth aspect of the disclosure, a vehicle comprising an electric power producing assembly and the control system according the fourth aspect of the disclosure is provided. The electric power producing assembly may be adapted to feed electric power to an electric power consuming assembly of the vehicle.

In some examples, including in at least one preferred example, optionally, the electric power producing assembly comprises a fuel cell system and an energy storage system comprising one or more batteries.

Optionally, the electric vehicle is a fuel cell hybrid electric vehicle or a fuel cell hybrid electric working machine.

The above aspects, accompanying claims, and/or examples disclosed herein above and later below may be suitably combined with each other as would be apparent to anyone of ordinary skill in the art.

Additional features and advantages are disclosed in the following description, claims, and drawings, and in part will be readily apparent therefrom to those skilled in the art or recognized by practicing the disclosure as described herein. There are also disclosed herein control units, computer readable media, and computer program products associated with the above discussed technical benefits.

### BRIEF DESCRIPTION OF THE DRAWINGS

With reference to the appended drawings, below follows a more detailed description of aspects of the disclosure cited as examples.
**FIG. 1** is a schematic side view of an exemplary vehicle comprising an electric power producing assembly according to an aspect of the disclosure.
**FIG. 2** is a diagram illustrating an exemplary driveline comprising an electric power producing assembly and an electric power consuming assembly.
**FIG. 3** is a flowchart illustrating an exemplary method of controlling the electric power producing assembly shown in Fig.2.
**FIG. 4** is a graph showing an exemplary use of dead band limits for the energy storage system.
**FIG. 5** is a graph showing an exemplary step of determining a first fuel cell power request.
**FIG. 6** is a graph showing an exemplary step of determining a second fuel cell power request.
**FIG. 7** is a graph relating to a fuel cell power request, being a sum of the first fuel cell power request shown in Fig. 5 and the second fuel cell power request shown in Fig. 6.
**FIG. 8** is a schematic diagram of an exemplary computer system for implementing examples disclosed herein, according to one example.

The drawings are schematic and not necessarily drawn to scale.

### DETAILED DESCRIPTION

Aspects set forth below represent the necessary information to enable those skilled in the art to practice the disclosure.

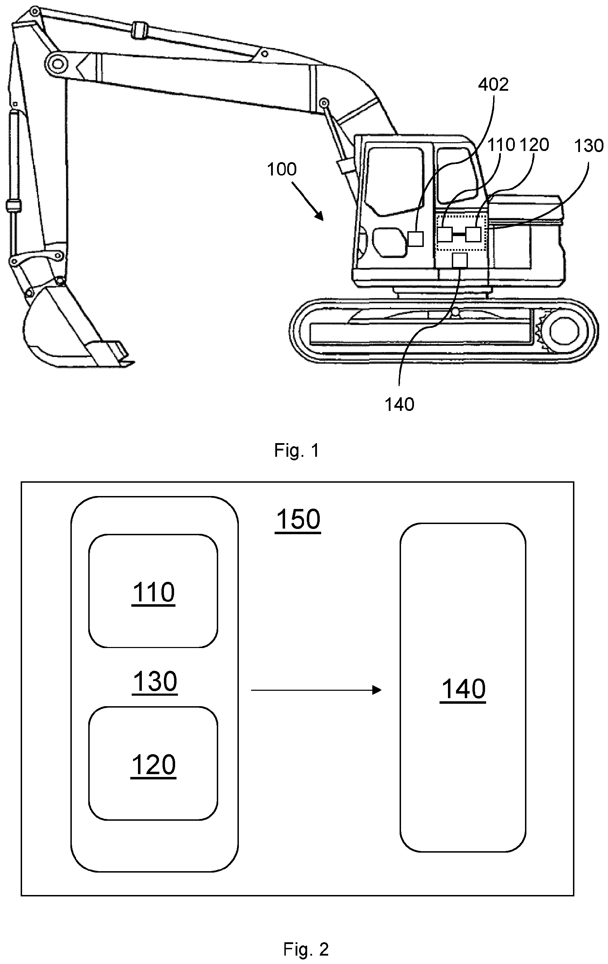

**FIG. 1** depicts a vehicle 100, which is exemplified by an excavator. Even though a fuel cell hybrid electric excavator 100 is shown, it shall be noted that the disclosure is not limited to this type of vehicle, and it may also be used for other electric vehicles, such as articulated haulers, wheel loaders, backhoe loaders or land vehicles, e.g., trucks or buses.

The vehicle 100 comprises an electric power producing assembly 130. The assembly 130 comprises a fuel cell system 110 and an energy storage system 120 comprising one or more batteries, and they are adapted to together produce electric power. The electric power will then be fed to an electric power consuming assembly 140, for instance using one or more cables (not shown). In the exemplary embodiment of the excavator 100, the electric power consuming assembly 140 may comprise one or more electric motors (not shown), configured to create a propulsion force for propelling the excavator 100 and/or for energizing hydraulic actuators of the excavator 100, such as lifting or tilting buckets. During normal operation when the excavator 100 is performing a task at a work site, for example, excavation of a mineral and/or loading of the mineral onto a dump truck, a power request may be generated from the electric power consuming assembly 140, such that the electric motors have sufficient power for energizing the hydraulic actuators.

The vehicle 100 further comprises a control system 402, which may also be referred to as a computer system. The control system 402 may comprise one or more control units, which may also be referred to as one or more processor devices. The one or more control units 402 are configured to control the electric power producing assembly (130) using a method according to an example embodiment of the disclosure.

**FIG. 2** illustrates an electric driveline 150 of the vehicle 100 shown in figure 1. The driveline 150 comprises the electric power producing assembly 130 and the electric power consuming assembly 140. The electric power producing assembly 130 is configured to produce a required electric power and to feed the required electric power to the electric power consuming assembly 140. As mentioned above, the power request may be generated by the electric power consuming assembly 140 during the operation of the vehicle 100. The electric power producing assembly 130 is controlled, using a method according to an example embodiment of the disclosure, to satisfy the power request.

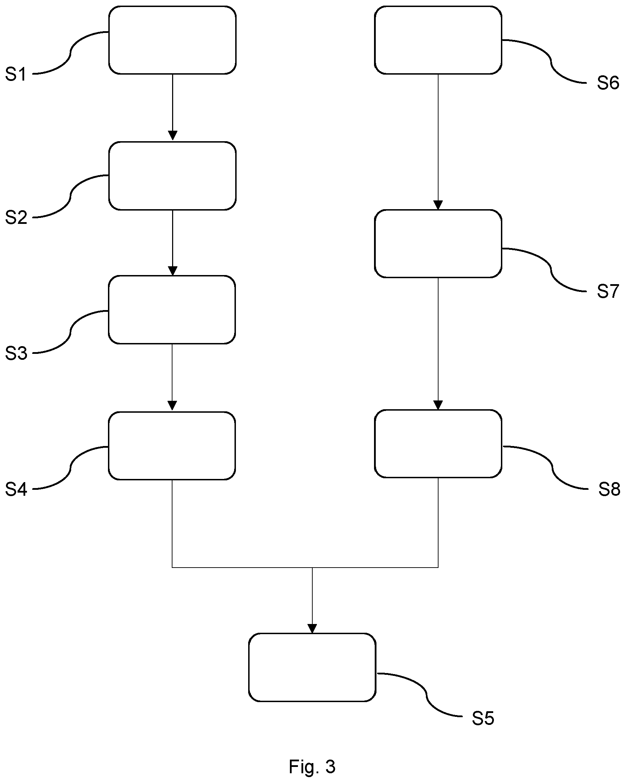

**FIG. 3** is a flowchart illustrating an exemplary method of controlling the electric power producing assembly 130. The method may be applied to any type of electric vehicles, e.g., the excavator 100 shown in Fig.1. It may also be applied to a stationery machine comprising the electric power producing assembly 130. The method comprises the steps listed in the following, which, unless otherwise indicated, may be taken in any suitable order. Unless otherwise indicated, the method may be performed by a processor device, such as by the control unit 402.

**Step 1:** receiving a total power request for the electric power producing assembly 130. The total power request may come from the electric power consuming assembly 140. The request may be generated when, for example, a user presses an acceleration pedal of the vehicle 100 as an input. It may also be generated when the user operates a joystick of the vehicle 100. For either scenario, a requested motor torque and an actual motor speed will be defined in accordance with the input and a power request for sufficiently powering the electric motors may thereby be determined. The electric power consuming assembly 140 may further comprise auxiliary electric power consumers of the vehicle 100 and a power request for powering the auxiliary electric power consumers may be determined accordingly. The total power request may be based on a calculation by adding requested power from every electric power consumer of the vehicle 100.

**Step 2:** determining information related to a power level currently expected from the energy storage system on the basis of the total power request. When a new total power request is generated, there may a power gap between the newly generated power request and an actual power available from the electric power producing assembly 140 (e.g. from the fuel cell system 110). The energy storage system 120 may be configured to provide the electric power for filling the gap due to the factor that batteries are quick in response to a newly generated power demand. Initially, there is a certain amount of power available from the fuel cell system 110, may be seen as a fuel cell system actual power level. The fuel cell system actual power level may for instance be a fuel cell power request from a last control loop. The power level currently expected from the energy storage system 120 may therefore be estimated by subtracting the fuel cell system's actual power level from the total power request, in order to satisfy the gap between them. It may be estimated each time when a new total power request is generated and may be used as an initial available power for the next control loop. The fuel cell system actual power level may be reported constantly to the processor device. As an alternative, the fuel cell system's actual power level may be added to the dead band limits (see [0057] below) and the total power request may be compared to the thus modified dead band limits in order to establish whether or not any portion of the total power request exceeds the thus modified limits. As such, be it way of subtraction, addition or any other type of operation, the power level currently expected from the energy storage system may be determined using the fuel cell system actual power level and the total power request.

If power level currently expected from the energy storage system 120 exceeds the physical limits of the energy storage system, the total power request may be forced to be reduced in order to protect the energy storage system 120. Alternatively, or additionally, if the rate of change of the first fuel cell power request is higher than a threshold, such that the fuel cell system 110 is not able to accommodate such a rapid power request, the total power request may be forced to be reduced in order to protect the fuel cell system 110.

**Step 3:** using dead band limits for the energy storage system 120. This step is to ensure that batteries of the energy storage system 120 will not be damaged when providing the expected power. By using the dead band limits, a power that can be provided by the energy storage system 120 may be defined. Depending on how the dead band limits are set, the power level currently expected from the energy storage 120 may be partially or fully located within the dead band limits. When it is fully located within the dead band limits, usually when the vehicle 100 is in a light load condition and/or when there are limited fluctuations in the total power request, no power will be transferred to the first fuel cell power request and the dynamic power will be completely provided by the energy storage system.

**Step 4:** determining (S4) a first fuel cell power request as a portion of the power level currently expected from the energy storage system 120 being outside one of the energy storage system dead band limits. When the power level currently expected from the energy storage 120 is partially located outside one of the dead band limits, the portion that exceeds the dead band limits will be transferred to a power request for the fuel cell system 110, termed as the first fuel cell power request, such that the fuel cell system 110 will contribute that portion. Since the first fuel cell power request may fluctuate dynamically with the total power request, it may be regarded as a dynamic power request.

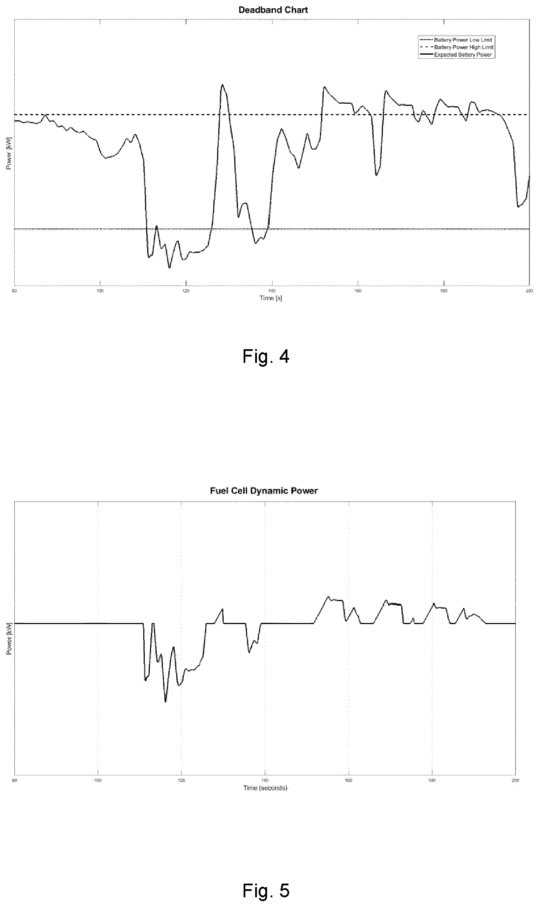

Fig. 4 and Fig. 5 illustrate an example of the use of dead band limits and the determination of the first fuel cell power request performed in step 4 and step 5. Here, Fig. 4 illustrates an example when the power level currently expected from the energy storage 120 is partially located outside one of the dead band limits. As shown in the figures, the power portion located outside of the dead band limits in Fig. 4 is taken out and is transferred to the first fuel cell power request shown in Fig. 5. The first fuel cell power request is thereby determined. If the dead band limits are enlarged to a level where the expected power level from the energy storage 120 is fully located within the dead band limits, no power will be transferred to the first fuel cell power request.

**Step 5:** controlling the fuel cell system 110 on the basis of at least the first fuel cell power request.

The method may further comprise the following steps for determining a second fuel cell power request:

**Step 6:** using information related to a current state-of-charge level of the energy storage system 120.

**Step 7:** determining energy storage system state-of-charge limits for the energy storage system 120 on the basis of the current state-of-charge level of the energy storage system 120.

**Step 8:** determining a second fuel cell power request on the basis of the current battery state-of-charge level such that the energy storage system 120 will not operate outside the energy storage system state-of-charge limits when the fuel cell system 110 and the energy storage system 120 together produce electric power in accordance with the total power request.

The second fuel cell power request may be understood as a static power request. Unlike the dynamic power request which may dynamically fluctuate with the total power request, the second fuel cell request is relatively stable. It is dependent on and is preferably only dependent on, the state-of-charge level of the energy storage system and may change steadily and smoothly with the state-of-charge level of the energy storage system. The second fuel cell request may be determined such that the fuel cell system 110 will provide sufficient power to ensure that the energy storage system 120 will not operate outside the determined state-of-charge limits.

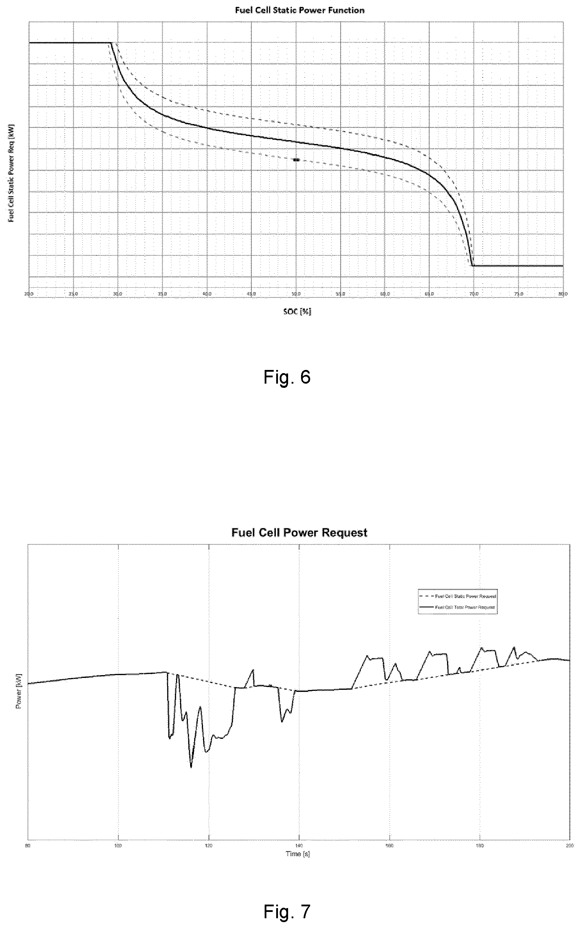

The second fuel cell power request may be determined by applying a non-linear P-gain function to the energy storage system state-of-charge limits. The P-gain function, which can be seen as a tangent function, may define the second fuel cell power request in a way such that the second fuel cell power request will be increased rapidly when the state-of-charge level of the energy storage system starts to approach to a relatively low level, e.g., when the state-of-charge of the energy storage system 120 level is drained to 35%, and/or will be decreased rapidly when the state-of-charge level of the energy storage system 120 starts to approach to a relatively high level, e.g. when the state-of-charge level is increased to 65%.The determination of the second fuel cell power request by use of a P-gain function can be visualized in Fig. 6.

The fuel cell system 110 may then be controlled on the basis of at least the first fuel cell power request and the second fuel cell power request, and more specifically, on the basis of at least a sum of the first fuel cell power request and the second fuel cell power request. To this end, it may be ensured that the energy storage system 120 will operate within the determined dead band limits as well as the determined state-of-charge limits. Fig. 7 shows an example of determining a fuel cell request by summing up the first fuel cell power request and the second fuel cell power request.

The step of using dead band limits for the energy storage system 120 may further comprise the following steps.

**Step 9:** using an operation level value, indicative of a desired operation level of the electric power producing assembly 130.

**Step10:** determining the dead band limits for the energy storage system 120 using the operation level value. The dead band limits are determined such that the power level currently expected from the energy storage system 120 is located between an upper dead band limit and a lower dead band limit, wherein the difference between upper dead band limit and the lower dead band limit is dependent on the operation level value.

Here the operational level value may be related to an operation mode currently selected for the vehicle 100. The operation mode may comprise an ECO mode, a power mode and a normal mode. Specifically, the ECO mode may refer to a mode when a large band between the upper limit and the lower limit of the energy storage system is set. With the large band being set, the dynamic power from the fuel cell system 110 is reduced and consequently a fuel consumption, in this case hydrogen gas consumption, is reduced. In an extreme example, the dead band limits may be set as being equal to the energy storage system's physical limits, and the energy storage system will operate at its physical limits. The total power request may be forced to reduce such that the energy storage system 110 will not operate at its physical limits. The power mode, on the contrary, may refer to a mode when a narrow band between the upper limit and the lower limit is set, such that power from the fuel cell system 110 is increased. The normal mode may be a compromise between the ECO mode and the power mode. The user may manually select one of the operation modes through buttons, a machine menu or knobs in the vehicle cab. Once the mode is selected, the dead band limits will be set accordingly.

Alternatively, the dead band limits may be adjusted automatically by the processor device. The band between the upper limit and the lower limit may be enlarged or may be restricted based on an average load of the electric power consuming assembly 140. If the average load is relatively low, the band may be enlarged to reduce the fuel consumption and vice versa.

Alternatively, the dead band limits may be determined remotely by an offline system. The system may monitor a state-of-health (SOH) of the fuel cell system 110 as well as the energy storage system 120 and determine desired dead band limits. All related data may be communicated wireless between the offline system and the processor device.

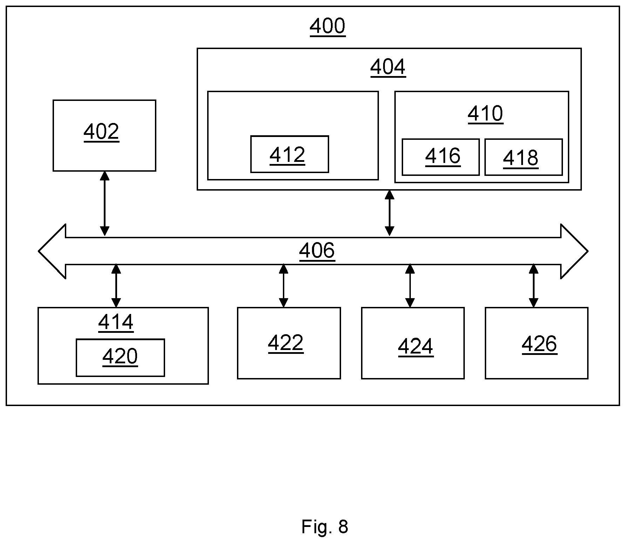

**FIG. 8** is a schematic diagram of a computer system **400,** also referred to as a control system, for implementing examples disclosed herein. The computer system **400** is adapted to execute instructions from a computer-readable medium to perform these and/or any of the functions or processing described herein. The computer system **400** may be connected (e.g., networked) to other machines in a LAN, an intranet, an extranet, or the Internet. While only a single device is illustrated, the computer system **400** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, etc., includes reference to one or more such devices to individually or jointly execute a set (or multiple sets) of instructions to perform any one or more of the methodologies discussed herein. For example, control system may include a single control unit, or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **400** may comprise at least one computing device or electronic device capable of including firmware, hardware, and/or executing software instructions to implement the functionality described herein. The computer system **400** may include one or more electronic control units **402,** such as the control unit **402** illustrated in **Fig. 1****,** which may also be referred to as a processor device, a memory **404,** and a system bus **406.** The computer system **400** may include at least one computing device having the control unit **402.** The system bus **406** provides an interface for system components including, but not limited to, the memory **404** and the control unit **402.** The control unit **402** may include any number of hardware components for conducting data or signal processing or for executing computer code stored in memory **404.** The control unit **402** (e.g., processor device) may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The control unit may further include computer executable code that controls operation of the programmable device.

The system bus **406** may be any of several types of bus structures that may further interconnect to a memory bus (with or without a memory controller), a peripheral bus, and/or a local bus using any of a variety of bus architectures. The memory **404** may be one or more devices for storing data and/or computer code for completing or facilitating methods described herein. The memory **404** may include database components, object code components, script components, or other types of information structure for supporting the various activities herein. Any distributed or local memory device may be utilized with the systems and methods of this description. The memory **404** may be communicably connected to the control unit **402** (e.g., via a circuit or any other wired, wireless, or network connection) and may include computer code for executing one or more processes described herein. The memory **404** may include non-volatile memory **408** (e.g., read-only memory (ROM), erasable programmable read-only memory (EPROM), electrically erasable programmable read-only memory (EEPROM), etc.), and volatile memory **410** (e.g., random-access memory (RAM)), or any other medium which can be used to carry or store desired program code in the form of machine-executable instructions or data structures and which can be accessed by a computer or other machine with a control unit **402.** A basic input/output system (BIOS) **412** may be stored in the non-volatile memory **408** and can include the basic routines that help to transfer information between elements within the computer system **400.**

The computer system **400** may further include or be coupled to a non-transitory computer-readable storage medium such as the storage device **414,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **414** and other drives associated with computer-readable media and computer-usable media may provide non-volatile storage of data, data structures, computer-executable instructions, and the like.

A number of modules can be implemented as software and/or hard-coded in circuitry to implement the functionality described herein in whole or in part. The modules may be stored in the storage device **414** and/or in the volatile memory **410,** which may include an operating system **416** and/or one or more program modules **418.** All or a portion of the examples disclosed herein may be implemented as a computer program product **420** stored on a transitory or non-transitory computer-usable or computer-readable storage medium (e.g., single medium or multiple media), such as the storage device **414,** which includes complex programming instructions (e.g., complex computer-readable program code) to cause the control unit **402** to carry out the steps described herein. Thus, the computer-readable program code can comprise software instructions for implementing the functionality of the examples described herein when executed by the control unit **402.** The control unit **402** may serve as a controller or control system for the computer system **400** that is to implement the functionality described herein, such as for the control system 4 illustrated in Fig. 2.

The computer system **400** also may include an input device interface **422** (e.g., input device interface and/or output device interface). The input device interface **422** may be configured to receive input and selections to be communicated to the computer system **400** when executing instructions, such as from a keyboard, mouse, touch-sensitive surface, etc. Such input devices may be connected to the processor device **402** through the input device interface **422** coupled to the system bus **406** but can be connected through other interfaces such as a parallel port, an Institute of Electrical and Electronic Engineers (IEEE) 1394 serial port, a Universal Serial Bus (USB) port, an IR interface, and the like. The computer system **400** may include an output device interface **424** configured to forward output, such as to a display, a video display unit (e.g., a liquid crystal display (LCD) or a cathode ray tube (CRT)). The computer system **400** may also include a communications interface **426** suitable for communicating with a network as appropriate or desired.

The operational steps described in any of the exemplary aspects herein are described to provide examples and discussion. The steps may be performed by hardware components, may be embodied in machine-executable instructions to cause a processor to perform the steps, or may be performed by a combination of hardware and software. Although a specific order of method steps may be shown or described, the order of the steps may differ. In addition, two or more steps may be performed concurrently or with partial concurrence.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, steps, operations, elements, and/or components, but do not preclude the presence or addition of one or more other features, integers, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the inventive concepts being set forth in the following claims.

## Claims

1. A computer system (400) comprising a processor device (402) configured to controlling an electric power producing assembly (130), said assembly (130) comprising a fuel cell system (110) and an energy storage system (120) comprising one or more batteries, wherein said fuel cell system (110) and said energy storage system (120) are adapted to together produce electric power, the processor device (402) further being configured to:
- receive a total power request for said electric power producing assembly (130),
- determine information related to a power level currently expected from said energy storage system (120) on the basis of said total power request,
- use dead band limits for said energy storage system (120),
- determine a first fuel cell power request as a portion of the power level currently expected from said energy storage system (120) being outside one of said energy storage system dead band limits, and
- control said fuel cell system (110) on the basis of at least said first fuel cell power request.

2. A computer-implemented method for controlling an electric power producing assembly (130) by a processor device of a computer system (400), said assembly (130) comprising a fuel cell system (110) and an energy storage system (120) comprising one or more batteries, wherein said fuel cell system (110) and said energy storage system (120) are adapted to together produce electric power, the method comprises:
- receiving (S1) a total power request for said electric power producing assembly (130),
- determining (S2) information related to a power level currently expected from said energy storage system (120) on the basis of said total power request,
- using (S3) dead band limits for said energy storage system (120),
- determining (S4) a first fuel cell power request as a portion of the power level currently expected from said energy storage system (120) being outside one of said energy storage system dead band limits, and
- controlling (S5) said fuel cell system (110) on the basis of at least said first fuel cell power request.

3. The method according to claim 2, wherein determining the information related to the power level currently expected from said energy storage system (120) comprises:
- determining (S2-1) a fuel cell system actual power level indicative of a power level currently produced by said fuel cell system (110), and
- determining (S2-2) said power level currently expected from said energy storage system (120) using said fuel cell system actual power level and said total power request, preferably subtracting said fuel cell system actual power level from said total power request.

4. The method according to claim 2 or 3, wherein the method further comprises:
- using (S6) information related to a current state-of-charge level of said energy storage system (120),
- using (S7) energy storage system state-of-charge limits for said energy storage system (120),
- determining (S8) a second fuel cell power request on the basis of said current battery state-of-charge level such that said energy storage system (120) will not operate outside said energy storage system state-of-charge limits when said fuel cell system (110) and said energy storage system (120) together produce electric power in accordance with said total power request, and
- controlling (S5) said fuel cell system on the basis of at least said first fuel cell power request and said second fuel cell power request.

5. The method according to claim 4, wherein the method further comprises:
- controlling (S5) said fuel cell system (110) on the basis of at least a sum of said first fuel cell power request and said second fuel cell power request.

6. The method according to any one of claims 2-4, wherein the method further comprises:
- in response to determining said power level currently expected from said energy storage system (120) is higher than an energy storage system threshold and/or in response to determining that the rate of change of the first fuel cell power request is higher than a rate of change threshold, reducing the total power request.

7. The method according to any one of claims 4 - 6 wherein the step of determining (S8) said second fuel cell power request comprises applying a non-linear P-gain function to said energy storage system state-of-charge limits.

8. The method according to any one of claims 2 - 7, wherein said method further comprises:
- using (S9) an operation level value, indicative of a desired operation level of said electric power producing assembly (130), and
- determining (S10) said dead band limits said energy storage system (120) using said operation level value,
preferably the step of determining (S10) said dead band limits for said power level currently expected from said energy storage system (120) comprises:
- determining (S10) said dead band limits such that said power level currently expected from said energy storage system (120) is located between an upper dead band limit and a lower dead band limit, wherein the difference between the upper dead band limit and the lower dead band limit is dependent on the operation level value.

9. A method for controlling an electric driveline (150) for a vehicle (100), said driveline comprising said electric power producing assembly (130), said assembly (130) comprising a fuel cell system (110) and an energy storage system (120) comprising one or more batteries, wherein said fuel cell system (110) and said energy storage system (120) are adapted to together produce electric power, and an electric power consuming assembly (140) being in communication with said electric power producing assembly (130), said method comprising:
- controlling (S11) said electric power producing assembly (130) in accordance with a method according to any one of claims 2-8, and
- feeding (S12) said electric power to said electric power consuming assembly (130).

10. The method according to claim 9, when dependent on claim 8, wherein said vehicle (100) is associated with one or more of the following operation modes: an ECO mode, a power mode and a normal mode, said method comprising:
- using (S 13) an operation mode currently selected for said vehicle (100) in order to set said operation level value.

11. A computer program product comprising program code for performing, when executed by the processor device, the method of any one of claims 2-11.

12. A control system (402) comprising one or more control units configured to perform the method of any one of claims 2-11.

13. A non-transitory computer-readable storage medium comprising instructions, which when executed by the processor device, cause the processor device to perform the method of any one of claims 2-11.

14. A vehicle (100) comprising an electric power producing assembly (130) adapted to feed electric power to an electric power consuming assembly (140) of said vehicle (100), and the control system according to claim 13, preferably said electric power producing assembly (130) comprises a fuel cell system (110) and an energy storage system (120) comprising one or more batteries.

15. The electric vehicle (100) according to claim 14, wherein said electric vehicle is a fuel cell hybrid electric vehicle or a fuel cell hybrid electric working machine.
